# EUROPEAN PATENT SPECIFICATION

(11) **EP 0 799 151 B1**
(45) Date of publication and mention of the grant of the patent: **10.02.1999**
(21) Application number: 95938054.4
(22) Date of filing: 07.11.1995
(51) Int. Cl.: B65D 85/57, G11B 33/04

(54) **METHOD FOR MANUFACTURING A PACKAGING, BLANK FOR USE THEREIN AND THUS MANUFACTURED PACKAGING**
VERFAHREN ZUM HERSTELLEN EINER VERPACKUNG, ZUSCHNITT DAFÜR UND SO HERGESTELLTE VERPACKUNG
METHODE DE FABRICATION D'UN EMBALLAGE, DESCRIPTION D'UNE DECOUPE DESTINEE A CET EMBALLAGE ET REALISATION DE L'EMBALLAGE

(30) Priority: 20.12.1994 NL 9402171
(43) Date of publication of application: 08.10.1997
(73) Proprietor: VAN DE STEEG PACKAGING B.V., 7532 RB Enschede (NL)
(72) Inventor: SMIT, Harm, Hendrik, NL-7531 CL Enschede (NL)
(74) Representative: Van den Heuvel, Henricus Theodorus
(86) International application number: NL9500382
(87) International publication number: WO9619398

(56) References cited:
- FR-A- 2 234 202
- GB-A- 2 219 573
- NL-A- 8 702 565
- US-A- 5 085 318

## Description

The invention relates to a method for manufacturing a packaging, in particular for at least one substantially flat data carrier.

Known from the international patent publication WO-A-9422742 is a packaging for a compact disc or CD which is manufactured from a blank of for instance cardboard. This known packaging is formed from a blank which has three mutually adjoining wall parts connected to each other by double crease lines, the middle wall part of which is intended as carrier part while the two other wall parts form cover parts. Both cover parts are in turn embodied in two portions and each have a strengthening surface which is folded and glued onto the cover part to obtain a packaging with a relative bending stiffness. The blank is therefore substantially U-shaped. The middle wall part is provided on both its free sides with fastening members which are connected thereto over a fold line and which in turn are each provided with a fold line embodied partly as continuous cut line.

The packaging is now formed by glueing to the middle wall part the edge of the fastening members located between the fold/cut line and the connecting line to the middle wall part, thus forming a carrier with two freely pivotable fastening members, and folding both strengthening parts to their associated wall parts and glueing them thereon, thus forming two cover parts with relative bending stiffness. The cover parts are then folded over the carrier part with fastening members respectively over the other cover part, thereby creating a completely integrally formed packaging, for instance for a CD.

The known packaging has the drawback that it requires a blank having lips arranged on either side of the middle wall part or carrier part for the purpose of forming the fastening members. The material of the blank is hereby used relatively inefficiently, resulting in much loss. This results in comparatively high material and printing costs.

From GB-A-2 219 573 a blank for manufacturing a packaging, in particular for a substantially flat data carrier is known, which blank comprises a substantially rectangular carrier part and a fastening part connected thereto on one side along a crease line and having substantially corresponding dimensions.

Relative to this prior art reference it is a purpose of the invention to provide a blank that is adapted such that it allows a very ready manufacturing of a packaging having improved capability of maintaining an object to be packed, particularly a substantially flat data carrier.

In view of the above the blank according to the invention is characterized by at least one break line dividing the fastening part into substantially equal parts.

The invention furthermore has for its object to provide an improved method for manufacturing a packaging as described above. This is achieved according to the invention by a method comprising the steps of:
i) forming a blank with a substantially rectangular carrier part and a fastening part connected thereto on one side and having substantially corresponding dimensions,
ii) folding together the carrier part and the fastening part along their common abutting side and mutually connecting thereof at least on the oppositely located side, and
iii) arranging in the fastening part at least one division between the abutting side and the side connected to the carrier part in order to form at least two fastening members located opposite each other.

By separating the fastening part into two or more fastening members only after arranging thereof on the carrier part, considerably more effective use is made of the material of the blank, whereby material and printing costs are comparatively low. Despite the additional operation for arranging the division which hereby becomes necessary, the method according to the invention has surprisingly been found to result in savings in the order of 30% in the costs of manufacturing the packaging.

The effect of the additional processing can in any case be minimized when, during forming of the blank, the fastening part is weakened at the position of the intended division and the division is formed by exerting on at least one side of the fastening part a force directed away from the carrier part, wherein the division can then be arranged when a product has been placed in the packaging. When the product is placed in the packaging the fastening members must in any case be pivoted upward from the carrier part, whereby the division is then effected simultaneously without an additional operation being required for this purpose.

A preferred embodiment is characterized in that on the side of at least one cut line remote from the middle of the fastening part is arranged a stop for a flat data carrier. It is possible by means of such a stop to accurately determine the position of a flat data carrier when it is situated in the finished packaging. It is possible for instance to allow the substantially flat data carrier to come into contact with the packaging on the recorded side only at the positions of the stops. When the stops are placed such that they engage on the recorded side of the substantially flat data carrier where it is not recorded, this limits the danger of damage and/or fouling of the recorded part of the flat data carrier. It is possible to manufacture the stops in the blank by deforming the blank material, but it is also conceivable for extra material portions forming the stops to be fixed to the blank. The former construction has the advantage that it is inexpensive to manufacture while the latter embodiment has the advantage that the material of the stops can differ from the material with which the blank is manufactured.

In another preferred embodiment the weakening for the intended division, the break line, encloses a central material portion close to the middle of the fastening part. When this central material portion is adhered to the carrier part of the blank, this central part can also function as spacer between a substantially flat data carrier for placing in the finished packaging and the central material portion. The central position of this spacer has the advantage that a substantially flat data carrier is not generally recorded close to the centre thereof. Another advantage of this central material portion is that it provides additional promotional possibilities. These additional promotional possibilities also exist when the central material portion is not fixed to the carrier part. When the join to one of the fastening parts is kept intact when the substantially flat data carrier is inserted, it is possible for the user of the packaging to remove this portion and use it as for instance a "coin", token or in other manner.

Finally, the invention relates to a packaging, in particular for at least one substantially flat data carrier. The packaging according to the invention is manufactured by carrying out the method as claimed in any of the appended claims 6-14.

The invention is now elucidated on the basis of an embodiment, wherein reference is made to the annexed drawing, in which:
Fig. 1 shows a perspective view of a blank as formed in a first step of the method according to the invention,
Fig. 2, 3 and 4 show schematic perspective views of a number of subsequent steps of this method,
Fig. 5 is a perspective view of the packaging formed with this method in the closed situation,
Fig. 6 is a perspective view of a variant of the blank as formed in the first step of the method according to the invention, and
Fig. 7 shows a schematic perspective view of a subsequent step in the processing of the blank of fig. 6 in accordance with the method according to the invention.

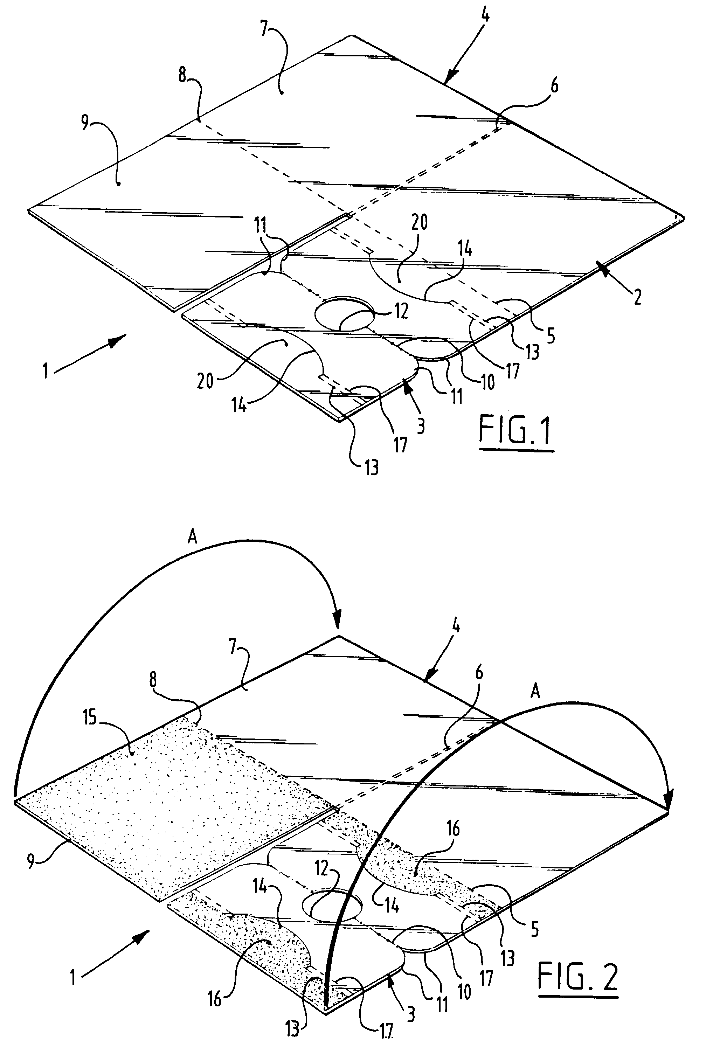

In the method according to the present invention the starting point is a blank 1 (fig. 1) having a substantially rectangular carrier part 2 and a fastening part 3 which is connected thereto on one side along a crease line 5 and which has substantially the same dimensions as carrier part 2. In addition, a cover part 4 is connected to carrier part 2 along a double crease line 6. Cover part 4 has a double form and consists of a base surface 7 and a strengthening surface 9 which is connected to the base surface 7 along a single crease line 8.

The fastening part 3 is provided in the middle with a weakened part or break line 10 which runs parallel to the fold line 5 by which fastening part 3 is connected to carrier part 2. The break line 10 can be for instance a perforated line or a practically fully continuous cut line which is only interrupted at a small number of, for instance four or six, positions by connecting parts or projections.

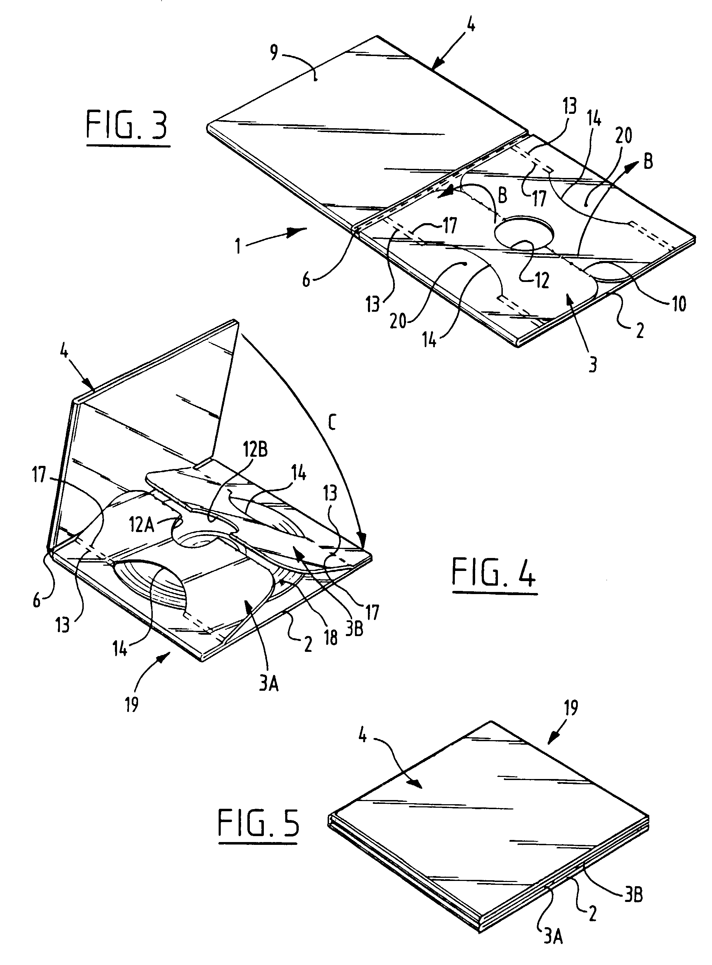

The break line 10 fans outward at the position of the side edges of the fastening part 3 to form rounded corners 11. Halfway along the break line 10 a for instance circular opening 12 is further arranged in fastening part 3 to form two gripping openings 12A, 12B in the completed packaging (fig. 4). Arranged in fastening part 3 on either side of break line 10 is a crease line 13 which has a curved part 14 which is cut completely through and thus forms a cut line. The portions 20 of fastening part 3 bounded by the curved cut lines 14 serve in the assembled situation of the packaging as support surface for a data carrier, as will be further elucidated below. Arranged adjacently of the crease lines 13 and running parallel thereto in the fastening part 3 are two crease lines 17 which are located closer to the break line 10 and the purpose of which will also be elucidated below.

After the blank 1 has been thus formed, the strengthening surface 9 of the cover part 4 is covered with a glue layer 15. Two glue layers 16 are also applied to the fastening part 3, this on either side of the break line 10 on edge surfaces bounded on the one side by the crease line 13 and cut line 14 and on the other side by the fold line 5 and the free end edge located opposite. The fastening part 3 and the strengthening surface 9 are then folded as according to arrows A on their respective fold line 5,8 and connected to the carrier part 2, respectively the base surface 7 of the cover part 4 (fig. 2).

A division is then arranged in the fastening part 3 by exerting on either side of the break line 10 a force directed away from the carrier part 2. The fastening part 3 hereby tears along break line 10 and the two halves thereof forming fastening members 3A,3B are pivoted open as according to arrows B (fig. 3). A product, for instance a flat data carrier 18, can now be received in the thus formed packaging 19. This data carrier 18, which could take the form of for instance a compact disc, herein protrudes through the apertures in the fastening members 3A,3B which are formed by the cut lines 14, and rests on the arcuate surfaces 20 bounded by the cut lines 14. Due to the presence of the second crease lines 17 the fastening members 3A,3B can then be folded flat over the data carrier 18. The cover part 4 is subsequently folded as according to arrow C (fig. 4) over the carrier part 2 and the data carrier 18 enclosed therein by the fastening members 3A,3B, whereby the packaging is ready for storage and dispatch. The material between the double crease line 6 herein forms the spine of packaging 19 which can thus be folded together to form a flat unit.

In this way a packaging 19 is obtained which is manufactured integrally from a single blank and which can be produced at comparatively low cost, and which moreover can be processed in simple manner after discarding because it only consists of a single material. Furthermore, because the fastening members 3A,3B are formed from a single fastening part 3 only after folding together of the packaging, which part 3 corresponds in dimensions with the carrier part 2 and an optional cover part 4, it is possible to start from a substantially rectangular blank. The quantity of cutting waste in the production of the blank hereby remains limited and, with effective "nesting", a relatively large number of blanks can be formed in a single processing operation from a piece of starting material of determined standard dimensions. Considerable savings are thus possible in both material costs and the costs of printing on the blank.

Although a packaging with a single cover part is shown here as example, it will be apparent to the skilled person that a number of cover parts can be used which can be joined to each other and to the carrier part on different sides. What is important here is that the starting point in each case is an integrally formed fastening part. It is of course also possible to arrange in the blank more than one carrier part and fastening part connected thereto. The packaging can thus be made suitable for accommodating a number of products such as for instance a double-CD.

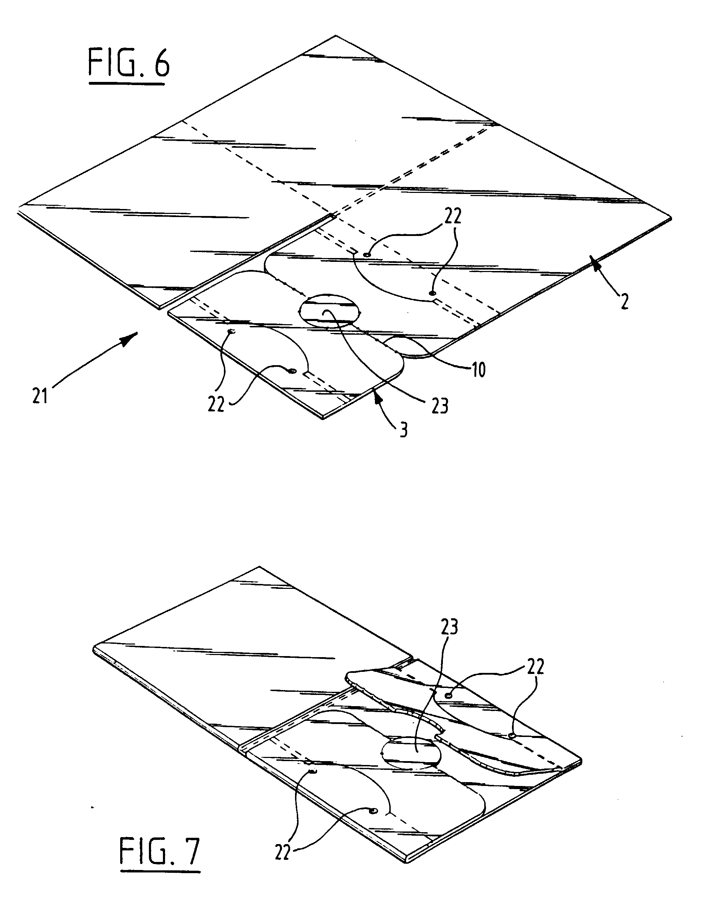

Fig. 6 shows a blank 21 wherein the fastening part 3 is provided with stops 22 for minimizing the contact between the recorded side of a data carrier 18 and the packaging to be made from blank 21. As made clearer in fig. 7, the stops 22 in these figures are arranged such that they engage onto the unrecorded edge portion of the recorded side of data carrier 18. There is great freedom of choice with regard to the shape and number of stops 22. In view of the fact that three points define a plane it is recommended to arrange at least three stops 22 in the blank 21. The stops 22 can be formed very simply in the blank 21 by deforming the blank material. When however the use of stops 22 with particular material properties is desired, it is possible for instance to adhere these to the starting blank 21 or at a subsequent stage to the processed blank 21.

As can also be seen in fig. 6 and 7, the fastening part 3 is provided with a central material part 23. The break line 10 surrounds this central material part 23, whereby the connection between fastening part 3 and the central material part 23 is weakened. The central material part 23 can be glued as desired to the carrier part 2 whereby, similarly to the stops 22, it functions as spacer for the recorded side of a data carrier 18 and/or functions as extra decorative element, whether printed or not. Another possibility is not to break the join between one of the fastening parts 3a, 3b during insertion of a flat data carrier 18. A user of the packaging having a data carrier received therein then has the option of removing the central material part 23. This provides the possibility of using the central material part 23 as "coin", token, guarantee tag or in other manner.

## Claims

1. Blank (1) for manufacturing a packaging (19), in particular for at least one substantially flat data carrier (18), said blank comprising a substantially rectangular carrier part (2) and a fastening part (3) connected thereto on one side along a crease line (5) and having substantially corresponding dimensions,
**characterized by**
at least one break line (10) dividing the fastening part (3) into substantially equal parts (3A, 3B).

2. Blank (1) as claimed in claim 11, **characterized in that** close to the middle of the fastening part (3) the break line (10) encloses a central material part (23).

3. Blank (1) as claimed in claim 1 or 2, **characterized in that** at least one crease line (13) embodied partially as fully continuous cut line (14) is arranged in each case on either side of the break line (10) in the fastening part (3).

4. Blank (1) as claimed in any of the claims 1-3, **characterized in that** on the side of at least one cut line (14) remote from the middle of the fastening part (3) is arranged a stop (22) for a substantially flat data carrier (18).

5. Blank (1) as claimed in any of the claims 1-4, **characterized by** at least one cover part (4) connected on one side to the carrier part (2) along a crease line (6).

6. Method for manufacturing a packaging (19), in particular for at least one substantially flat data carrier (18), comprising the steps of:
i) forming a blank (1) according to any of the claims 1-5, said blank comprising a substantially rectangular carrier part (2) and a fastening part (3) connected thereto on one side (5) and having substantially corresponding dimensions, and
ii) folding together the carrier part (2) and the fastening part (3) along their common abutting side (5) and mutually connecting thereof at least on the opposite side,
**characterized by** the step of:
iii) arranging in the fastening part (3) at least one division between the abutting side (5) and the side connected to the carrier part (2) in order to form at least two fastening members (3A,3B) located opposite each other.

7. Method as claimed in claim 6, **characterized in that** during forming of the blank (1) the fastening part (3) is weakened at the position of the intended division.

8. Method as claimed in claim 7, **characterized in that** the division is formed by exerting on at least one side of the fastening part (3) a force directed away from the carrier part (2).

9. Method as claimed in any of the claims 6-8, **characterized by** the step of (ia) applying a glue layer (16) to the carrier part (2) and/or the fastening part (3) along the abutting side (5) and the oppositely located side.

10. Method as claimed in any of the claims 6-9, **characterized in that** during forming of the blank (1) on either side of the intended division at least one crease line (13) embodied partially as fully continuous cut line (14) is arranged in each case in the fastening part (3).

11. Method as claimed in claim 10, **characterized in that** on the side of at least one cut line (14) remote from the middle of the fastening part (3) is arranged a stop (22) for a substantially flat data carrier.

12. Method as claimed in any of the claims 9-11, **characterized in that** during step (ia) a glue layer is also applied to a central material part (23) of the fastening part (3) and that the blank (1) is weakened round this central part (23).

13. Method as claimed in any of the claims 6-12, **characterized in that** connected to the carrier part (2) on at least one side is a cover part (4) which is folded over the fastening part (3) after step (iii).

14. Method as claimed in any of the claims 6-13, **characterized in that** the division is arranged only after a product, in particular a substantially flat data carrier (18), has been placed in the packaging (19).

15. Packaging (19), in particular for at least one substantially flat data carrier (18), manufactured by carrying out the method as claimed in any of the claims 6-14.

## Patentansprüche

1. Zuschnitt (1) zum Herstellen einer Verpackung (19), insbesondere für wenigstens einen, im wesentlichen flachen Datenträger (18), wobei der Zuschnitt einen im wesentlichen rechteckigen Trägerteil (2) sowie einen Befestigungs- bzw. Aufnahmeteil umfaßt, der daran an einer Seite entlang einer Faltlinie (5) angebracht ist und im wesentlichen entsprechende Abmessungen hat,
dadurch gekennzeichnet, daß
wenigstens eine Brechlinie (10) den Befestigungsteil (3) in im wesentlichen gleiche Teile (3A 3B) teilt.

2. Zuschnitt (1) nach Anspruch 11, dadurch gekennzeichnet, daß die Brechlinie (10) nahe der Mitte des Befestigungsteils (3) einen zentralen Materialteil (23) umschließt.

3. Zuschnitt (1) nach Anspruch 1 oder 2, dadurch gekennzeichnet, daß wenigstens eine Faltlinie (13), die teilweise als vollständig durchgehende, geschnittene Linie (14) ausgeführt ist, in jedem Falle auf beiden Seiten der Brechlinie (10) in dem Befestigungsteil (3) angeordnet ist.

4. Zuschnitt (1) nach einem der Ansprüche 1-3, dadurch gekennzeichnet, daß ein Stop (22) für im wesentlichen flache Datenträger (18) an der Seite wenigstens einer geschnittenen Linie (14), die von der Mitte des Befestigungsteils (3) entfernt liegt, angeordnet ist.

5. Zuschnitt (1) nach einem der Ansprüche 1-4, gekennzeichnet durch wenigstens einen Abdeckteil (4), der entlang einer Faltlinie (6) an einer Seite mit dem Trägerteil (2) verbunden ist.

6. Verfahren zum Herstellen einer Verpackung (19), insbesondere für wenigstens einen im wesentlichen flachen Datenträger (18), das die Schritte umfaßt:
i) Ausbilden eines Zuschnitts (1) gemäß irgendeinem der Ansprüche 1 bis 5, wobei der Zuschnitt einen im wesentlichen rechteckigen Trägerteil (2) umfaßt sowie einen Befestigungs- bzw. Halteteil (3), der daran an einer Seite (5) angebracht ist und im wesentlichen entsprechende Abmessungen hat, und
ii) Zusammenfalten des Trägerteils (2) und des Befestigungsteils (3) entlang ihrer gemeinsamen, aneinanderliegenden Seite (5) und deren gegenseitiges Verbinden an zumindest ihrer gegenüberliegenden Seite,
gekennzeichnet durch den Schritt:
iii) Anordnen wenigstens einer Teilung in dem Befestigungs- bzw. Halteteil (3) zwischen der aneinanderliegenden Seite (5) und der mit dem Trägerteil (2) verbundenen Seite, um wenigstens zwei Befestigungs- bzw. Halteelemente (3A, 3B) auszubilden, die einander gegenüberliegen.

7. Verfahren nach Anspruch 6, dadurch gekennzeichnet, daß während des Ausbildens des Zuschnitts (1) der Befestigungsteil (3) am Ort der beabsichtigten Teilung geschwächt wird.

8. Verfahren nach Anspruch 7, dadurch gekennzeichnet, daß die Teilung ausgebildet wird durch Ausüben einer von dem Trägerteil (2) weggerichteten Kraft auf wenigstens eine Seite des Befestigungsteils (3).

9. Verfahren nach einem der Ansprüche 6-8, gekennzeichnet durch den Schritt: (ia) Auftragen einer Klebeschicht (16) auf dem Trägerteil (2) und/oder dem Befestigungsteil (3) entlang der aneinanderliegenden Seite (5) und der gegenüberliegend angeordneten Seite.

10. Verfahren nach einem der Ansprüche 6-9, dadurch gekennzeichnet, daß während dem Ausbilden des Zuschnitts (1) an jeder Seite der vorgesehenen Teilung wenigstens eine Faltlinie (13), die teilweise als vollständig durchgehende, geschnittene Linie (14) ausgeführt ist, jeweils in dem Befestigungsteil (3) angeordnet ist.

11. Verfahren nach Anspruch 10, dadurch gekennzeichnet, daß an der Seite wenigstens einer geschnittenen Linie (14), die von der Mitte des Befestigungsteils (3) entfernt liegt, ein Stop (22) für im wesentlichen flache Datenträger angeordnet ist.

12. Verfahren nach einem der Ansprüche 9-11, dadurch gekennzeichnet, daß während des Schrittes (ia) zudem eine Klebeschicht einem zentralen Materialteil (23) des Befestigungsteils (3) zugeführt wird und daß der Zuschnitt (1) um diesen zentralen Teil (23) geschwächt ist.

13. Verfahren nach einem der Ansprüche 6-12, dadurch gekennzeichnet, daß ein Abdeckteil (4), das nach Schritt iii) über den Befestigungsteil (3) gefaltet wurde, mit dem Trägerteil (2) an wenigstens einer Seite verbunden ist.

14. Verfahren nach einem der Ansprüche 6-13, dadurch gekennzeichnet, daß die Teilung erst dann angeordnet bzw. ausgebildet wird, wenn ein Produkt, insbesondere ein im wesentlichen flacher Datenträger (18) in der Verpackung (19) angeordnet wurde.

15. Verpackung (19) insbesondere für wenigstens einen im wesentlichen flachen Datenträger (18), hergestellt durch Ausführung des Verfahrens nach einem der Ansprüche 6-14.

## Revendications

1. Flan (1) destiné à la fabrication d'un conditionnement (19), en particulier destiné à au moins un support de données sensiblement plat (18), ledit flan comprenant une partie formant support sensiblement rectangulaire (2) et une partie de fixation (3) y étant reliée d'un côté le long d'une ligne de pliage et ayant des dimensions sensiblement correspondantes,
caractérisé en ce qu'il comprend
au moins une ligne de rupture (10) divisant la partie de fixation (3) en parties (3A, 3B) sensiblement égales.

2. Flan (1) selon la revendication 1, caractérisé en ce que tout près du centre de la partie de fixation (3) la ligne de rupture (10) enserre une partie de matière centrale (23).

3. Flan (1) selon la revendication 1 ou 2, caractérisé en ce qu'au moins une ligne de pliage (13) se présentant de manière partielle sous la forme d'une ligne prédécoupée entièrement continue (14) est réalisée de part et d'autre de la ligne de rupture (10) dans la partie de fixation (3).

4. Flan (1) selon l'une quelconque des revendications 1-3, caractérisé en ce que sur le côté d'au moins une ligne prédécoupée (14), éloignée du centre de la partie de fixation (3), est disposée une butée (22) pour un support de données sensiblement plat (18).

5. Flan (1) selon l'une quelconque des revendications 1-4, caractérisé en ce qu'il présente au moins une partie de recouvrement (4) reliée sur un côté à la partie formant support (2) suivant une ligne de pliage (6).

6. Procédé de fabrication d'un conditionnement (19), notamment pour au moins un support de données sensiblement plat (18), comprenant les étapes consistant à :
i) réaliser un flan (1) selon l'une quelconque des revendications 1-5, ledit flan comprenant une partie formant support sensiblement rectangulaire (2) et une partie de fixation (3) reliée à celle-ci sur un côté (5) et présentant des dimensions sensiblement correspondantes, et
ii) replier ensemble la partie formant support (2) et la partie de fixation (3) le long de leur côté en contact d'extrémité commun (5) et relier mutuellement celles-ci au moins sur le côté opposé,
caractérisé par l'étape consistant à :
iii) ménager dans la partie de fixation (3) au moins une division entre le côté de contact d'extrémité (5) et le côté relié à la partie formant support (2) de manière à constituer au moins deux rabats de fixation (3A, 3B) disposés l'un à l'opposé de l'autre.

7. Procédé selon la revendication 6, caractérisé en ce que, lors du formage du flan (1), la partie de fixation (3) est affaiblie au niveau de l'emplacement de la division prévue.

8. Procédé selon la revendication 7, caractérisé en ce que la division est obtenue en exerçant sur au moins un côté de la partie de fixation (3) une force orientée à l'opposé de la partie formant support (2).

9. Procédé selon l'une quelconque des revendications 6-8, caractérisé par l'étape consistant à (ia) appliquer une couche de colle (16) sur la partie formant support (2) et/ou la partie de fixation (3) le long du côté de contact d'extrémité (5)et du côté se trouvant à l'opposé.

10. Procédé selon l'une quelconque des revendications 6-9, caractérisé en ce que, lors du formage du flan (1), de part et d'autre de la division prévue, au moins une ligne de pliage (13), se présentant de manière partielle sous la forme d'une ligne prédécoupée entièrement continue (14) est ménagée dans chaque cas dans la partie de fixation (3).

11. Procédé selon la revendication 10, caractérisé en ce que sur un côté d'au moins une ligne prédécoupée (14), éloignée du centre de la partie de fixation (3) est agencée une butée (22) pour un support de données sensiblement plat.

12. Procédé selon l'une quelconque des revendications 9-11, caractérisé en ce que lors de l'étape (ia), une couche de colle est également appliquée sur une partie de matière centrale (23) de la partie de fixation (3) et en ce que le flan (1) est affaibli autour de cette partie centrale (23).

13. Procédé selon l'une quelconque des revendications 6-12, caractérisé en ce qu'il est prévu, reliée à la partie formant support (2) sur au moins un côté, une partie de recouvrement (4) qui est rabattue sur la partie de fixation (3) après l'étape (iii).

14. Procédé selon l'une quelconque des revendications 6-13, caractérisé en ce que la division est réalisée seulement après qu'un produit, en particulier un support de données sensiblement plat (18) a été placé dans le conditionnement (19).

15. Conditionnement (19), destiné en particulier à au moins un support de données sensiblement plat (18), fabriqué en utilisant le procédé selon l'une quelconque des revendications 6-14.
